Europäisches Patentamt

European Patent Office

Office européen des brevets

(19)

(11) Numéro de publication: **0 110 756**
**B1**

(12) **FASCICULE DE BREVET EUROPEEN**

(45) Date de publication du fascicule du brevet:
**27.08.86**

(51) Int. Cl.⁴: **B 60 T 13/52**

(21) Numéro de dépôt: **83402147.9**

(22) Date de dépôt: **04.11.83**

(54) **Système générateur de pression de freinage.**

(30) Priorité: **05.11.82 ES 517452**

(43) Date de publication de la demande:
**13.06.84 Bulletin 84/24**

(45) Mention de la délivrance du brevet:
**27.08.86 Bulletin 86/35**

(84) Etats contractants désignés:
**DE FR GB IT**

(56) Documents cités:
**EP - A - 0 045 231**
**US - A - 2 603 066**

(73) Titulaire: **BENDIX ESPANA S.A., Balmes 243,
Barcelona 6 (ES)**

(72) Inventeur: **Simon, Bacardit, Juan, Calle Mallorca 451,
Barcelona 7 (ES)**

(74) Mandataire: **Le Moenner, Gabriel et al, SERVICE
BREVETS BENDIX 44, Rue François 1er, F-75008 Paris
(FR)**

## Description

La présente invention concerne les systèmes générateurs de pression de freinage, plus particulièrement pour véhicule automobile, du type comprenant un servomoteur pneumatique d'assistance, typiquement à dépression, couplé à un maître-cylindre pour au moins un circuit de freinage du véhicule, le servomoteur comprenant un boîtier, une paroi mobile axialement dans le boîtier, divisant celui-ci en deux chambres et couplée à un piston du maître-cylindre par un organe tubulaire s'étendant axialement au travers du maître-cylindre, et une valve à trois voies d'actionnement disposée dans un corps de valve central associé à la paroi mobile et commandée par une tige de poussée s'étendant axialement dans l'organe tubulaire et dont l'extrémité opposée à la valve est destinée à coopérer avec un organe d'entrée d'actionnement du système.

Un tel système générateur de pression de freinage est décrit dans US-A-2603066 et dans la demande de brevet européenne 0045231 au nom de la demanderesse, dont le contenu est supposé intégré ici pour référence. Les systèmes de ce type offrent l'avantage d'occuper un volume moins important dans le compartiment moteur du véhicule et de supprimer les problèmes posés au niveau du boîtier du servomoteur par les efforts de réaction en utilisation, contrairement par exemple aux systèmes classiques du type «en série» où le maître-cylindre est supporté par le servomoteur à l'opposé de la tige de poussée de commande de la valve du servomoteur. Toutefois, les agencements connus de ce type de système présentent une certaine complexité au niveau de la fabrication et de l'assemblage des éléments de la valve dans la partie centrale de la paroi mobile formant piston ainsi que pour ce qui est de la solidarisation de cette dernière avec l'organe tubulaire couplé au piston du maître-cylindre.

La présente invention a pour objet de proposer un système du type défini ci-dessus dans un agencement obviant à ces inconvénients et permettant un assemblage rapide et fiable des composants actifs du servomoteur tout en simplifiant la fabrication.

Pour ce faire, selon l'invention, le corps de valve est réalisé sous la forme d'un ensemble de valve unitaire préassemblé monté sur une extrémité de l'organe tubulaire s'étendant au travers de la paroi mobile de façon à associer directement la paroi mobile à l'organe tubulaire. De façon plus spécifique, l'ensemble de valve unitaire est avantageusement vissé sur l'extrémité de l'organe tubulaire, la paroi mobile étant immobilisée entre l'ensemble de valve unitaire et un épaulement extérieur de l'organe tubulaire.

Avec un tel agencement, la paroi mobile peut être réalisée très simplement et très économiquement, de même que l'ensemble de valve unitaire pré-assemblé dont la mise en place ou l'interchangeabilité peuvent être effectuées très rapidement et à moindres coûts.

Les systèmes générateur de pression de freinage du type conforme à l'invention, destinés à être montés, au niveau du maître-cylindre, sur une paroi du véhicule séparant le compartiment moteur de l'habitacle, mettent en œuvre une communication de la valve d'actionnement avec l'atmosphère au niveau de la paroi avant du boîtier du servomoteur, c'est-à-dire à l'intérieur du compartiment moteur, à la différence des systèmes classiques du type «en série» où cette communication s'effectue de l'autre côté, dans l'habitacle du véhicule, à travers la paroi support. Or, le compartiment moteur offre un environnement beaucoup plus sévère que l'habitacle, notamment du fait de la projection d'eau ou d'autres particules contaminantes liquides et solides par le bas de la caisse. Les valves d'actionnement de servomoteur d'assistance sont classiquement pourvues, dans le trajet d'admission de l'air atmosphérique, d'une rondelle filtre en matériau cellulaire ou fibreux. Toutefois, en raison des charges en particules liquides de l'atmosphère dans le compartiment moteur, ces filtres classiques peuvent présenter des risques de colmatage ou de saturation rapide.

La présente invention a pour autre objet de proposer, pour un système générateur de pression de freinage du type défini ci-dessus, une structure de filtrage permettant d'obvier à ces inconvénients et de conserver pendant une durée de vie accrue les qualités de filtrage du filtre.

Pour ce faire, selon une caractéristique de l'invention, il est prévu une structure de filtrage, typiquement montée sur une ouverture centrale de la coquille avant du boîtier du servomoteur, définissant un trajet de passage en chicane et un moyen de drainage de liquide.

D'autres caractéristiques et avantages de la présente invention ressortiront de la description suivante de modes de réalisation, donnés à titre illustratif, faite en relation avec les dessins annexés, sur lesquels:

la fig. 1 est une vue partiellement en coupe longitudinale d'un système générateur de pression de freinage selon l'invention;

la fig. 2 est une vue frontale partielle montrant un détail d'exécution à la périphérie de l'embase de l'ensemble de valve unitaire;

les fig. 3 et 4 sont des vues de détail montrant des variantes de réalisation de la structure de filtrage du servomoteur; et

les fig. 5 et 6 représentent des variantes de l'organe d'étanchéité flexible reliant l'ensemble de valve unitaire à la paroi frontale du boîtier.

Dans la description qui va suivre et sur les dessins, les éléments identiques ou analogues portent les mêmes chiffres de référence, éventuellement indicés. De façon générale, les termes «avant» et «arrière» se réfèrent respectivement aux parties droite et gauche sur les dessins en respectant ainsi l'orientation classique d'un véhicule automobile.

Le système générateur de pression de freinage selon l'invention est constitué de l'assemblage d'un maître-cylindre 1 et d'un servomoteur pneumatique d'assistance 2 monté en porte-à-faux sur l'extrémité avant du maître-cylindre 1, lequel comporte des moyens, tels qu'une collerette 3, pour le montage du système sur une paroi fixe (non représentée) d'un véhicule automobile. Conformément à l'agencement global décrit dans la demande européenne 0 045 231 sous-mentionnée, le servomoteur 2 comprend un boîtier formé par l'assemblage périphérique d'une coquille avant 4 et d'une coquille arrière 5, une paroi mobile formant piston 6 divisant l'intérieur du boîtier en deux chambres, typiquement une chambre avant ou de dépression 7 et une chambre arrière ou de travail 8. Un moyen de valve à trois voies 10 est associé à la paroi mobile 6 et est commandé par une tige de poussée 11 traversant axialement le maître-cylindre 1 de façon à coopérer avec un poussoir ou organe d'entrée d'actionnement du système 12 reçu à coulissement dans la partie d'extrémité arrière du maître-cylindre 1 et auquel est couplée la tige de poussée de manœuvre 13 reliée à la pédale de frein du véhicule (non représentée). La paroi mobile 6 est solidarisée à un organe tubulaire de traction 14 traversant également axialement le maître-cylindre en entourant la tige de poussée de commande 11 pour coopérer, typiquement au moyen d'une collerette d'extrémité arrière 15 s'étendant radialement vers l'extérieur, avec le piston primaire 16 du maître-cylindre via un disque de réaction annulaire 17 contre lequel porte également, par exemple périphériquement au moyen d'un prolongement tubulaire 18, le poussoir d'actionnement 12.

Conformément à l'invention, le moyen de valve 10 est constitué sous forme d'un ensemble de valve unitaire pré-assemblé monté sur l'extrémité avant de l'organe tubulaire de traction 14 est relié à une zone centrale d'extrémité annulaire 19 de la paroi frontale avant 4 du servomoteur 2 par un organe d'étanchéité flexible 50, 50' ou 50". La paroi mobile 6 comprend un plateau de piston 60 avantageusement en tôle et une membrane roulante périphérique 61 en matériau élastomère. L'extrémité avant de l'organe tubulaire 14 est filetée et présente en retrait du filetage, un épaulement radial extérieur 40. Le plateau du piston 60 comporte un alésage central enfilé sur l'extrémité avant de l'organe tubulaire 14 de façon à venir porter en butée contre l'épaulement 40. L'ensemble de valve 10 comprend un plateau ou embase arrière annulaire 20 formant un manchon intérieur taraudé 21 destiné à être vissé sur l'extrémité filetée de l'organe tubulaire 14. L'ensemble de valve 10 comprend un premier moyen de clapet mobile axialement 22 constitué d'une partie centrale en tôle estampée sur laquelle est surmoulée périphériquement une membrane élastique appliquée par sa périphérie contre la périphérie de l'embase annulaire 20, ainsi qu'un second moyen de clapet 23 en matériau élastomère armé centralement monté par sa périphérie dans un couvercle de valve 24 en forme de coupelle dont la virole périphérique est montée sur l'embase 20 d'une façon qui sera décrite en détail plus avant. Les deux moyens de clapet sont maintenus en place périphériquement par une entretoise cylindrique 25 pourvue d'orifices de passage 26 entre les deux moyens de clapet. L'ensemble de valve est complété par un manchon profilé central en forme de coupelle 27 serti ou riveté dans une ouverture centrale de la paroi frontale avant du couvercle 24. Le premier moyen de clapet 22 est sollicité vers l'arrête, en direction du maître-cylindre, par un ressort 28 prenant appui sur la paroi frontale formant fond du manchon 27 tandis qu'un ressort en étoile 29, prenant appui contre la paroi frontale avant du couvercle 24, sollicite le second moyen de clapet 23 contre le siège formé par le rebord ourlé rabattu vers l'avant de la partie cylindrique du manchon 27, dans la position de repos représentée sur les figures. Dans cette position de repos, le premier moyen de clapet 22 est écarté du second moyen de clapet 23 qui forme siège mobile pour ce premier moyen de clapet 22. Dans cette position de repos, l'air atmosphérique, parvenant à la valve 10 via une structure de filtrage 80 qui sera explicitée plus avant, et par des ouvertures 30 formées dans la paroi frontale avant du couvercle 24, occupe une première chambre définie entre le second moyen de clapet 23, le manchon central 27 et le couvercle 24.

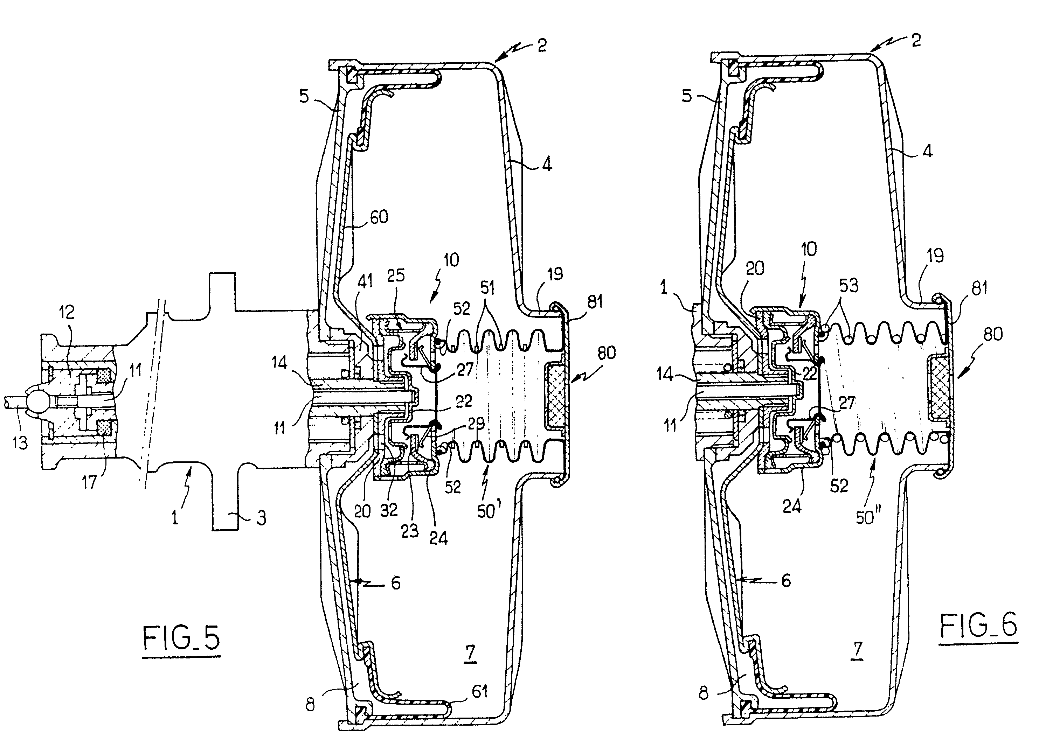

Corrélativement, la chambre de travail 8 communique avec la chambre de dépression 7 (connectée, de façon connue en soi, à une source de dépression du véhicule) par un passage formé par des ouvertures 31 de la partie centrale du plateau de piston 60, des ouvertures en correspondance 32 (fig. 5) de l'embase 20, la chambre intérieure définie entre le premier moyen de clapet 22 et cet embase 20, des ouvertures 33 formées dans le premier moyen de clapet, la chambre intermédiaire entre les deux moyens de clapet, les ouvertures 26 de l'entretoise 25, et des ouvertures 34 formées dans la virole cylindrique du couvercle 24. Dans la position de montage, représentée sur les dessins, la tige de poussée de commande 11 a son extrémité avant portant contre la partie centrale du plateau du premier moyen de clapet 22, éventuellement pourvue à cet effet d'un logement tubulaire. La tige de poussée de commande 11 peut être dimensionnée pour normalement venir en contact avec la face avant du poussoir 12, comme décrit dans la demande 0 045 231, le réglage initial s'effectuant alors par détermination de cotes précises de l'ensemble du système. De préférence, conformément à l'invention, l'extrémité arrière 35 de la tige de poussée 11 est filetée et est reçue dans un alésage taraudé de poussoir 12, le réglage initial s'effectuant alors par rotation relative de ces deux éléments. Avec un tel agencement, on prévoira avantageusement un joint annulaire 36 entre la tige de poussée 11 et l'organe de traction tubulaire 14.

En fonctionnement, quand la tige de poussée 11 est déplacée vers la droite suite à un incrément de poussée de la tige de commande 13, la tige 11 déplace vers la droite le premier moyen de clapet 22 à l'encontre de son ressort de rappel 28 pour l'amener à porter, dans un premier temps, contre le second moyen de clapet 23, interrompant ainsi la communication entre les deux chambres 7 et 8 du servomoteur. Un complément de poussée sur la tige 11 amène le premier moyen de clapet 22 à écarter le second moyen de clapet 23 de son siège constitué par le manchon 27 à l'encontre du ressort 29, pour admettre ainsi l'air atmosphérique dans la chambre de travail 8 via la chambre intermédiaire de la valve et les ouvertures 33, 32 et 31. La pression différentielle ainsi créée de part et d'autre de la paroi mobile 6 déplace celle-ci vers l'avant de façon à actionner avec la force d'assistance recherchée le maître-cylindre via l'organe de traction tubulaire 14.

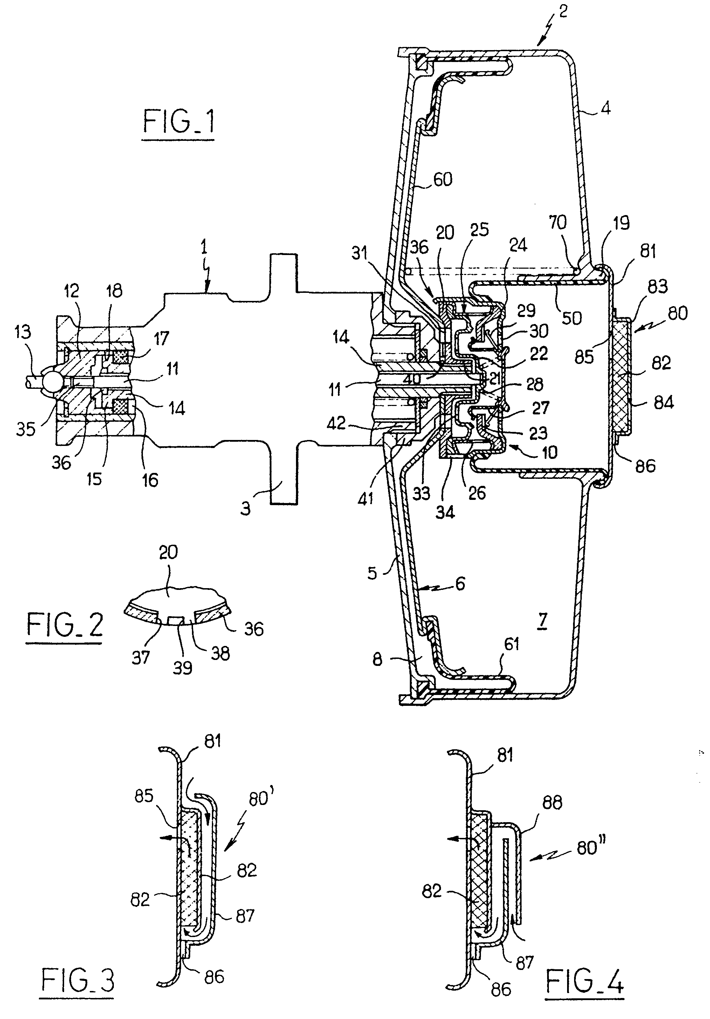

Conformément à un aspect de l'invention, le bord libre de la virole cylindrique du couvercle 24 est serti, comme montré en 36, sur la périphérie de l'embase annulaire 20. Toutefois, pour permettre le vissage de l'ensemble unitaire de valve 10 sur l'extrémité filetée avant de l'organe tubulaire 14, la virole cylindrique du couvercle 24 présente, angulairement réparties, des découpes 37 dans lesquelles s'étendent des pattes saillant radialement vers l'extérieur 38 de l'embase annulaire 20 ménageant entre elles des encoches 39, non intéressées donc par le sertissage du couvercle et servant de prise pour un outil de vissage de l'ensemble de valve 10 sur l'organe tubulaire 14, ce vissage solidarisant le plateau 60 de la paroi mobile 6 à l'organe tubulaire 14. Comme on le voit sur la fig. 1, certaines des ouvertures 31 du plateau support 60 peuvent être prolongées radialement pour coopérer avec des saillies d'indexage de l'embase annulaire 20 pour garantir l'indexation entre les ouvertures de passage 31 et 32. Dans les modes de réalisation représentés, la paroi frontale arrière de la coquille 5 est bridée entre le corps de maître-cylindre 1 et un couvercle de maître-cylindre 41 vissé sur l'extrémité avant filetée 42 du corps de maître-cylindre, le couvercle 41 assurant la butée de retour en fin de course de l'équipage paroi mobile 6/ensemble de valve 10. Dans le mode de réalisation de la fig. 1, l'organe d'étanchéité flexible 50 est constitué d'une membrane élastique à roulement maintenue sur une saillie axiale formée au niveau de la zone centrale d'extrémité annulaire 19 de la paroi avant 4 et sur laquelle est sertie la plaque support 81 de la structure de filtrage 80, le ressort de rappel 70 de la paroi mobile 6 prenant appui sur la paroi avant 4 au niveau de cette saillie axiale.

La structure de filtrage 80 du mode de réalisation de la fig. 1 comporte un disque de filtre 82 maintenu entre la plaque support 81 et un couvercle 83 présentant une ouverture d'entrée d'air 84 décalée en chicane de l'ouverture de passage 85 formée dans la plaque support 81, un passage de drainage 86 étant ménagé entre la partie inférieure du couvercle 83 et la plaque support 81.

Dans le mode de réalisation de la fig. 3, la structure de filtrage 80' comporte, en sus de couvercle 83 de maintien du filtre 82, une plaque de chicane additionnelle 87 à la base de laquelle est ménagé le passage de drainage 86. Les trajets de passage de l'air atmosphérique sont figurés par des flèches. La variante de structure de filtrage 80″

de la fig. 4 diffère de la précédente en ce sens qu'il comporte en plus de la plaque de filtrage 87 orientée vers le haut une seconde plaque de chicane avant 88 orientée vers le bas.

Dans le mode de réalisation de la fig. 5, l'organe d'étanchéité flexible 50' est ici constitué d'un soufflet armée par des anneaux 51, l'extrémité intérieure du soufflet 50' étant montée sur des pattes ourlées vers l'extérieur 52 de la paroi frontale avant du couvercle 24 et son extrémité extérieure étant pincée entre un prolongement annulaire central 19 de la paroi frontale avant 4 du boîtier de servomoteur 2 et la plaque support 81 de la structure de filtrage 80. Le mode de réalisation de la fig. 6 est similaire à celui de la fig. 5 si ce n'est que le soufflet 50″ a des ondulations développées en pas de vis, les anneaux d'armure étant ici remplacés par un ressort hélicoïdal 53 prenant appui contre la plaque support 81 de la structure de filtrage 80 et pouvant se substituer au ressort de rappel 70 de la paroi mobile 6. Par rapport au mode de réalisation à diaphragme roulant de la fig. 1, les structures d'étanchéité à soufflets permettent de réduire la surface intérieure du servomoteur exposée à la pression atmosphérique et donc d'augmenter ainsi la surface effective de piston de servomoteur.

## Revendications

1. Système générateur de pression de freinage, comprenant un servomoteur pneumatique d'assistance (2) couplé à un maître-cylindre (1) pour au moins un circuit de freinage, le servomoteur comprenant un boîtier (4, 5), une paroi (6) mobile axialement dans le boîtier, divisant celui-ci en deux chambres (7, 8) et couplée à un piston (16) du maître-cylindre par un organe tubulaire (14) s'étendant axialement au travers du maître-cylindre, et une valve à trois voies d'actionnement (10), disposée dans un corps de valve central associé à la paroi mobile et commandée par une tige de poussée (11) s'étendant axialement dans l'organe tubulaire (14) et dont l'extremité (35) opposée à la valve est destinée à coopérer avec un organe d'entrée (12) d'actionnement du système, caractérisé en ce que le corps de valve est réalisé sous la forme d'un ensemble de valve unitaire préassemblé (10) monté sur une extrémitée de l'organe tubulaire (14) s'étendant au travers de la paroi mobile de façon à associer directement la paroi mobile (6) à l'organe tubulaire (14).

2. Système selon la revendication 1, caractérisé en ce que l'ensemble de valve (10) est vissé (21) sur l'extrémité de l'organe tubulaire (14), la paroi mobile (6) étant immobilisée entre l'ensemble de valve (10) et un épaulement extérieur (40) de l'organe tubulaire.

3. Système selon la revendication 1 ou la revendication 2, caractérisé en ce que l'ensemble de valve (10) est relié par un organe d'étanchéité flexible (50, 50', 50″) à une zone centrale d'extrémité annulaire (19) de la paroi de boîtier (4) opposée au maître-cylindre (1).

4. Système selon la revendication 3, caractérisé en ce que l'ensemble de valve (10) comprend une embase annulaire (20) de montage sur l'organe tubulaire et un couvercle (24) monté sur l'embase et renfermant les moyens de clapet (22, 23) de la valve.

5. Système selon la revendication 4, caractérisé en ce que le couvercle (24) est serti sur la périphérie de l'embase annulaire (20), des moyens (39) de réception d'un outil de vissage étant prévus sur cette périphérie de l'embase.

6. Système selon la revendication 4 ou la revendication 5, caractérisé en ce que les moyens de clapet comprennent un premier clapet (22) mobile axialement coopérant avec la tige de poussée (11).

7. Système selon la revendication 6, caractérisé en ce que les moyens de clapet comprennent un second clapet (23) mobile axialement sous l'effet d'un déplacement du premier clapet (22) et formant siège mobile pour ce premier clapet.

8. Système selon la revendication 6 ou la revendication 7, caractérisé en ce que l'extrémité (35) de la tige de poussée (11) opposée à la valve est solidarisée de façon réglable à l'organe d'entrée (12) d'actionnement du système.

9. Système selon l'une des revendications 3 à 8, caractérisé en ce que l'organe d'étanchéité flexible est un diaphragme à roulement (50).

10. Système selon l'une des revendications 3 à 8, caractérisé en ce que l'organe d'étanchéité flexible est un soufflet armé (50', 50").

11. Système selon la revendication 10, caractérisé en ce que le soufflet (50") est à pas hélicoïdal, l'armure étant constituée par un ressort hélicoïdal (53) de rappel de la paroi mobile (6).

12. Système selon l'une des revendications 3 à 11, caractérisé en ce que l'ouverture définie par ladite zone centrale d'extrémité annulaire (19) de la coquille (4) du boîtier comporte une structure de filtrage (80, 80', 80").

13. Système selon la revendication 12, caractérisé en ce que la structure de filtrage (80, 80', 80") définit un trajet de passage en chicane et un moyen (86) de drainage de liquide.

**Patentansprüche**

1. Bremsdruckerzeuger mit einem pneumatischen Servomotor (2), der mit einem Hauptzylinder (1) für mindestens einen Bremskreis verbunden ist, wobei der Servomotor versehen ist mit einem Gehäuse (4, 5), einer im Gehäuse axial beweglichen Wand (6), die das Gehäuse in zwei Kammern (7, 8) unterteilt, und mit einem Kolben (16) des Hauptzylinders durch ein rohrförmiges Teil (14) verbunden ist, das sich axial durch den Hauptzylinder erstreckt, und einem betätigbaren Dreiwegeventil (10), das in einem der beweglichen Wand zugeordneten zentralen Ventilkörper angeordnet ist und von einer Schubstange (11) betätigt wird, die sich axial in das rohrförmige Teil (14) erstreckt und deren dem Ventil abgewandtes Ende (35) mit einem Eingangssteuerglied (12) des Druckerzeugers zusammenwirkt, dadurch gekennzeichnet, dass der Ventilkörper die Form einer vormontierten Ventileinheit (10) hat, die an einem Ende des rohrförmigen Teils (14) angebracht ist, das sich durch die bewegliche Wand so hindurcherstreckt, dass die bewegliche Wand (6) dem rohrförmigen Teil (14) direkt zugeordnet ist.

2. Bremsdruckerzeuger nach Anspruch 1, dadurch gekennzeichnet, dass die Ventileinheit (10) auf das Ende des rohrförmigen Teils (14) aufgeschraubt (21) ist, wobei die bewegliche Wand (6) zwischen der Ventileinheit (10) und einer äusseren Schulter (40) des rohrförmigen Teiles festgelegt ist.

3. Bremsdruckerzeuger nach Anspruch 1 oder 2, dadurch gekennzeichnet, dass die Ventileinheit (10) durch ein flexibles Dichtungsteil (50, 50', 50") mit einem zentralen ringförmigen Endbereich (19) der dem Hauptzylinder (1) gegenüberliegenden Wand des Gehäuses (4) verbunden ist.

4. Bremsdruckerzeuger nach Anspruch 3, dadurch gekennzeichnet, dass die Ventileinheit (10) einen ringförmigen Grundkörper (20) zur Befestigung an dem rohrförmigen Teil und einen Deckel (24) aufweist, der an dem Grundkörper befestigt ist und die Ventilteile (22, 23) des Ventils einschliesst.

5. Bremsdruckerzeuger nach Anspruch 4, dadurch gekennzeichnet, dass der Deckel (24) am Umfang des Grundkörpers (20) falzartig angebracht ist, wobei Mittel (39) zur Aufnahme eines Schraubwerkzeuges an diesem Umfang des Grundkörpers vorgesehen sind.

6. Bremsdruckerzeuger nach Anspruch 4 oder 5, dadurch gekennzeichnet, dass die Ventilteile einen ersten axial beweglichen Schliesskörper (22) umfassen, der mit der Schubstange (11) zusammenwirkt.

7. Bremsdruckerzeuger nach Anspruch 6, dadurch gekennzeichnet, dass die Ventilteile einen zweiten Schliesskörper (23) umfassen, der unter der Wirkung einer Verschiebung des ersten Schliesskörpers (22) axial beweglich ist und einen beweglichen Ventilsitz für den ersten Schliesskörper bildet.

8. Bremsdruckerzeuger nach Anspruch 6 oder 7, dadurch gekennzeichnet, dass das dem Ventil gegenüberliegende Ende (35) der Schubstange (11) in verstellbarer Weise mit dem Eingangssteuerglied (12) des Druckerzeugers verbunden ist.

9. Bremsdruckerzeuger nach einem der Ansprüche 3 bis 8, dadurch gekennzeichnet, dass das flexible Dichtungsteil eine Rollmembran (50) ist.

10. Bremsdruckerzeuger nach einem der Ansprüche 3 bis 8, dadurch gekennzeichnet, dass das flexible Dichtungsteil ein bewehrter Faltenbalg (50', 50") ist.

11. Bremsdruckerzeuger nach Anspruch 10, dadurch gekennzeichnet, dass der Faltenbalg (50") schraubenförmig verläuft, wobei die Bewehrung von einer Schraubenfeder (53) zum Rückholen der beweglichen Wand (6) gebildet wird.

12. Bremsdruckerzeuger nach einem der Ansprüche 3 bis 11, dadurch gekennzeichnet, dass die Öffnung, die von dem zentralen Bereich des ringförmigen Endes (19) der Gehäuseschale (4) gebildet wird, eine Filtriereinrichtung (80, 80', 80") enthält.

13. Bremsdruckerzeuger nach Anspruch 12, dadurch gekennzeichnet, dass die Filtriereinrichtung (80, 80', 80") einen labyrinthartigen Strömungsweg und eine Flüssigkeitsablasseinrichtung (86) bildet.

**Claims**

1. A brake pressure generating system comprising a pneumatic servo motor (2) coupled to a master cylinder (1) for at least one brake circuit, the servo motor comprising a casing (4, 5), a wall (6) axially movable in the casing and dividing the latter into two chambers (7, 8) and coupled to a piston (16) of the master cylinder by a tubular member (14) axially extending across the master cylinder, and a three-way actuating valve (10) disposed in a central valve body associated to the movable wall and controlled by a push rod (11) axially extending into the tubular member (14) and having an extremity (35) opposite to the valve arranged to cooperate with an actuating input member (12) of the system, characterized in that the valve body is in the form of a preassembled unitary valve assembly (10) mounted on an extremity of the tubular member (14) extending across the movable wall such as to directly associate the movable wall (6) to the tubular member (14).

2. The system according to claim 1, characterized in that the valve assembly (10) is threadably engaged (21) on the extremity of the tubular member (14), the movable wall (6) being fixed between the valve assembly (10) and an external shoulder (40) of the tubular member.

3. The system according to claim 1 or claim 2, characterized in that the valve assembly (10) is connected to a central zone of the annular extremity (19) of the wall of the casing (4) opposite to the master cylinder (1) by a flexible seal member (50, 50', 50").

4. System according to claim 3, characterized in that the valve assembly (10) comprises an annular base (20) for mounting on the tubular member and a closure (24) mounted on the base and enclosing valve means (22, 23) of the valve.

5. System according to claim 4, characterized in that the closure (24) is lock-seamed on the periphery of the annular base (20), means (39) for receiving a screwing tool being provided on said periphery of the base.

6. System according to claim 4 or claim 5, characterized in that the valve means comprise an axially movable first valve member (22) cooperating with the push rod (11).

7. System according to claim 6, characterized in that the valve means comprise a second valve member (23) axially movable by a displacement of the first valve member (22) and forming a movable seat for the first valve member.

8. System according to claim 6 or claim 7, characterized in that the extremity (35) of the push rod (11) opposite to the valve is connected to the actuating input member (12) of the system in adjustable manner.

9. System according to any of claims 3 to 8, characterized in that the flexible seal member is a rolling diaphragm (50).

10. System according to any of claims 3 to 8, characterized in that the flexible seal member is an armoured bellows (50, 50', 50").

11. System according to claim 10, characterized in that the bellows (50") is of helical shape, the armour being comprised of a helical spring (53) for returning the movable wall (6).

12. System according to any of claims 3 to 11, characterized in that the opening defined by said central zone of the annular extremity (19) of the casing shell (4) comprises a filtering structure (80, 80', 80").

13. System according to claim 12, characterized in that the filtering structure (80, 80', 80") defines a flow passage of labyrinth type and liquid drainage means (86).

6

FIG_1

FIG_2

FIG_3

FIG_4

0110756

FIG_6

FIG_5